# EUROPEAN PATENT APPLICATION

(11) **EP 4 345 962 A1**
(43) Date of publication of application: **03.04.2024**
(21) Application number: 23192718.7
(22) Date of filing: 22.08.2023
(51) Int. Cl.: H01M 10/04, H01M 10/0525, H01M 10/0587, H01M 50/46

(54) **METHOD FOR MANUFACTURING BATTERY**

(30) Priority: 08.09.2022 JP 2022143305
(71) Applicant: Prime Planet Energy & Solutions, Inc., Chuo-ku Tokyo 103-0022 (JP)
(72) Inventor: NISHIDA, Akira, Tokyo, 103-0022 (JP); ISEDA, Taisuke, Tokyo, 103-0022 (JP)
(74) Representative: Kuhnen & Wacker Patent- und Rechtsanwaltsbüro PartG mbB

(57) **Abstract**

The present disclosure provides a method for manufacturing includes: an adhesive layer formation step of forming a first adhesive layer on a surface of at least one of a positive electrode sheet and a first separator and forming a second adhesive layer on a surface of at least one of the positive electrode sheet and a second separator; and a wound electrode body fabrication step of fabricating a wound electrode body by winding the first separator, the positive electrode sheet, second separator, and the negative electrode sheet.

## Description

### BACKGROUND OF THE DISCLOSURE

### 1. Field

The present disclosure relates to a method for manufacturing a battery.

### 2. Background

Conventionally, batteries including a wound electrode body have been known, in which a strip-shaped positive electrode sheet including a positive electrode active material layer and a strip-shaped negative electrode sheet including a negative electrode active material layer are wound with a strip-shaped separator interposed therebetween in a longitudinal direction. For example, Japanese Patent No. 5328034 discloses a method for manufacturing a battery, including: a step in which a separator with a surface having an adhesive layer is prepared, the separator is placed between a positive electrode sheet and a negative electrode sheet, which are laminated and wound to form an electrode body group; and a step in which the electrode body group is heat-pressed to integrate at least one of the positive electrode sheet and the negative electrode sheet with the separator.

### SUMMARY

By disposing an adhesive layer at a desired position in an electrode body, for example, formability of the electrode body can be suitably improved, and reliability of a battery can be improved. For example, if a separator attached with an adhesive layer is once wound around a reel or the like and then unwound again for fabricating a wound electrode body, the adhesive layer may be damaged or deformed. Furthermore, in recent years, there has been a tendency that various battery capacities are required and accordingly sizes of electrode bodies, numbers of laminated layers, and the like are optionally changed. Thus, a position at which an adhesive layer is placed varies depending on the size of each electrode body. However, when preparing a separator or a positive electrode sheet in which a position of an adhesive layer is changed for each electrode body is changed, the cost may increase. The present disclosure was made in view of these circumstances, and an object of the present disclosure is to provide a battery manufacturing method that achieves a battery with higher reliability.

In the method for manufacturing a battery disclosed herein, the battery includes a wound electrode body having a first separator, a positive electrode sheet, a second separator, and a negative electrode sheet that are wound together, in which the positive electrode sheet and the first separator are bonded to each other by a first adhesive layer, and the positive electrode sheet and the second separator are bonded to each other by a second adhesive layer. The manufacturing method includes: an adhesive layer formation step of forming the first adhesive layer on a surface of at least one of the positive electrode sheet and the first separator and forming the second adhesive layer on a surface of at least one of the positive electrode sheet and the second separator; and a wound electrode body fabrication step of fabricating the wound electrode body by winding the first separator, the positive electrode sheet, the second separator, and the negative electrode sheet.

According to this configuration, the wound electrode body fabrication step is successively executed after the adhesive layer formation step. Thereby, the position at which the adhesive layer is formed can be easily controlled, and the adhesive layer can be suitably located at a desired position on the electrode body. Furthermore, since the adhesive layer is not wound around a reel or the like after forming the adhesive layer, the adhesive layer is not damaged, so that an electrode body with a higher quality adhesive layer can be fabricated. Thus, for example, such a manufacturing method makes it possible to improve the formability of the electrode body and provide a more reliable battery.

### BRIEF DESCRIPTION OF THE DRAWINGS

FIG. 1 is a schematic perspective view illustrating a battery according to an embodiment;
FIG. 2 is a schematic longitudinal sectional view taken along line II-II in FIG. 1;
FIG. 3 is a schematic longitudinal sectional view taken along line III-III in FIG. 1;
FIG. 4 is a schematic transverse sectional view taken along line IV-IV in FIG. 1;
FIG. 5 is a schematic perspective view illustrating an electrode body attached to a sealing plate;
FIG. 6 is a schematic perspective view illustrating the electrode body equipped with a positive electrode second current collector and a negative electrode second current collector;
FIG. 7 is a schematic diagram illustrating a configuration of a wound electrode body;
FIG. 8 is a schematic enlarged view illustrating interfaces between a positive electrode sheet, a negative electrode sheet, a first separator, and a second separator of the wound electrode body;
FIG. 9 is a schematic diagram illustrating a manufacturing method according to an embodiment;
FIG. 10 is a schematic diagram illustrating a configuration of a winding machine;
FIG. 11 is a schematic sectional view illustrating a winding core located at a first position;
FIG. 12 is a schematic diagram illustrating a configuration of the winding machine;
FIG. 13 is a diagram corresponding to FIG. 2, illustrating a battery according to the second embodiment; and
FIG. 14 is a schematic diagram illustrating another example of the configuration of the winding machine.

### DETAILED DESCRIPTION OF THE PREFERRED EMBODIMENTS

Embodiments of a technology disclosed herein will be explained below with reference to the figures. Items other than those specifically described in this specification, which are necessary for implementing the technology disclosed herein (e.g. general configurations and manufacturing processes of the battery, which do not characterize the technology disclosed herein) may be understood as design items for those skilled in the art based on the conventional technology in the field. The technology disclosed herein can be implemented based on the contents disclosed herein and the common general technical knowledge in the art. Note that, the description "A to B" indicating a range in this specification encompasses a meaning "A or more and B or less" as well as a meaning "more than A" and "less than B".

The term "battery" in this specification refers to all power storage devices from which electrical energy can be drawn, and this term conceptually encompasses primary and secondary batteries. The term "secondary battery" in this specification refers to all power storage devices that can repeatedly charge and discharge electricity by transfer of charge carriers between the positive and negative electrodes via an electrolyte, and conceptually encompasses so-called storage batteries (chemical batteries) such as lithium ion secondary batteries and nickel metal hydride batteries, as well as capacitors (physical batteries) such as electric double layer capacitors.

The method for manufacturing a battery disclosed herein is intended to manufacture a battery including a wound electrode body having a strip-shaped first separator, a strip-shaped positive electrode sheet, a strip-shaped second separator, and a strip-shaped negative electrode sheet that are wound together, in which the positive electrode sheet and the first separator are bonded via a first adhesive layer and the positive electrode sheet and the second separator are bonded via a second adhesive layer. This manufacturing method includes at least an adhesive layer formation step for forming the first adhesive layer and the second adhesive layer, and a wound electrode body fabrication step for fabricating the wound electrode body. In this embodiment, first, the configuration of the battery manufactured by this manufacturing method, and next, the manufacturing method disclosed herein will be explained.

### <Configuration of Battery>

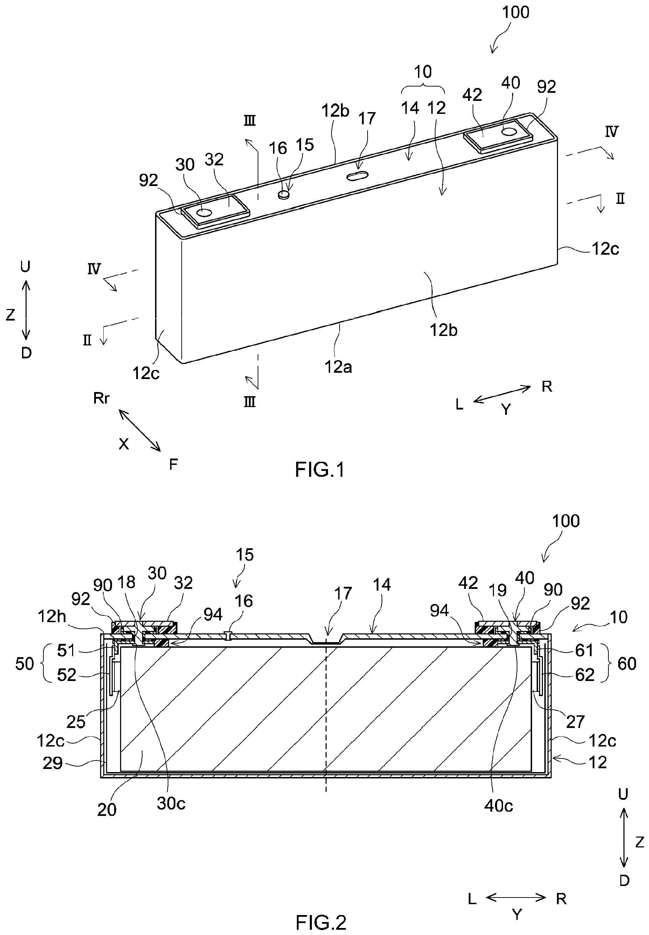

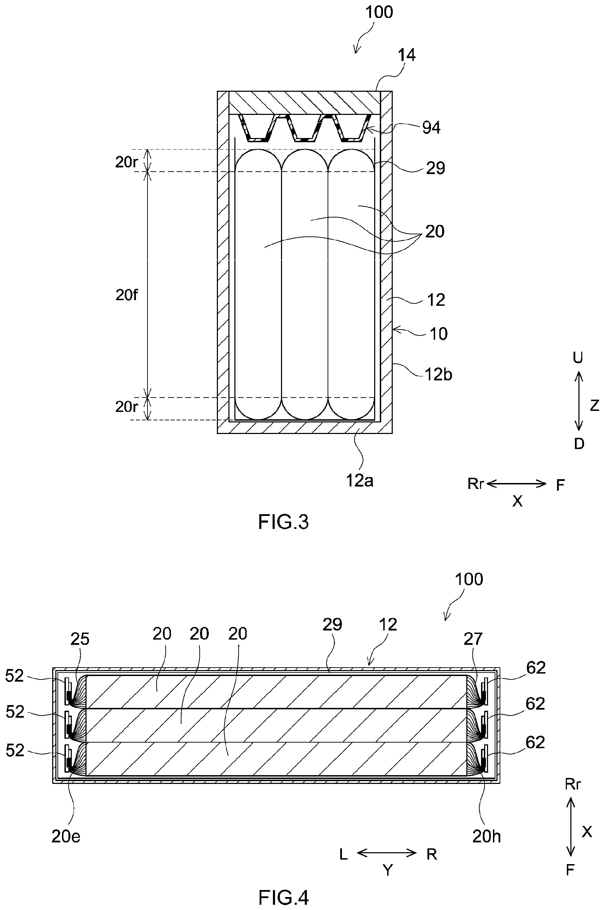

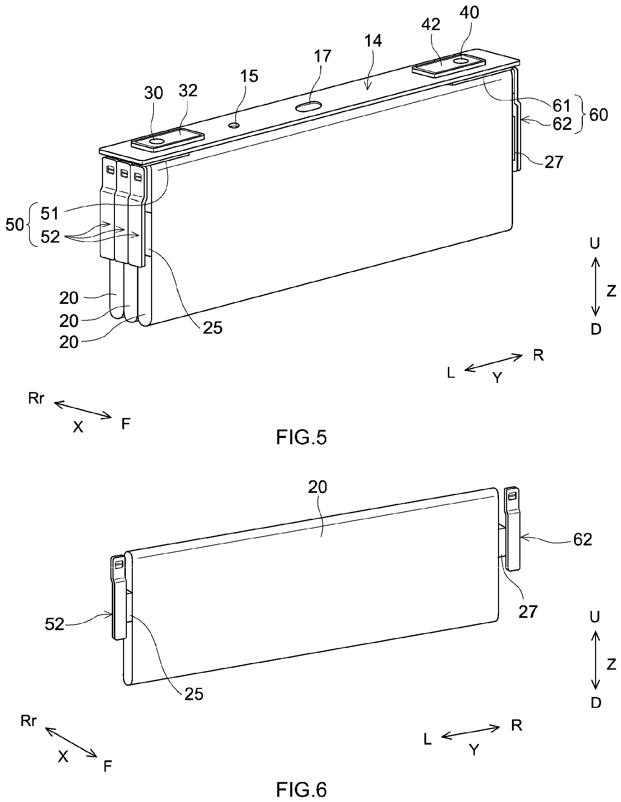

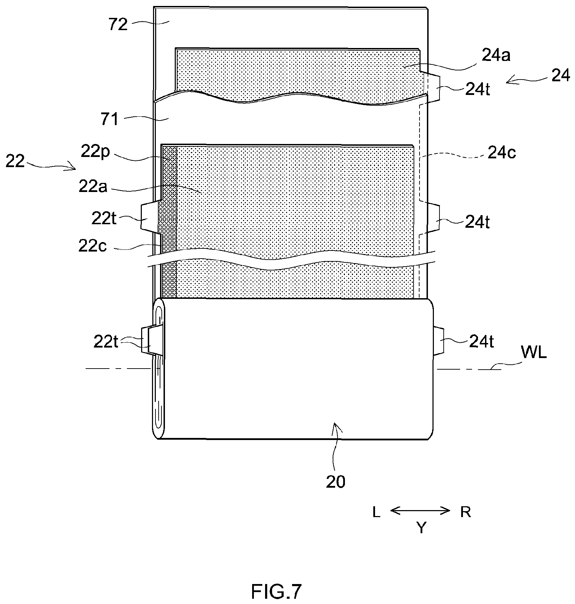

One embodiment of a battery manufactured by the manufacturing method disclosed herein will be explained below with reference to FIG. 1 to FIG. 7. FIG. 1 is a perspective view illustrating a battery 100. FIG. 2 is a schematic longitudinal sectional view taken along line II-II in FIG. 1. FIG. 3 is a schematic longitudinal sectional view taken along line III-III in FIG. 1. FIG. 4 is a schematic transverse sectional view taken along line IV-IV in FIG. 1. FIG. 5 is a schematic perspective view illustrating an electrode body attached to a sealing plate. FIG. 6 is a perspective view illustrating the electrode body equipped with a positive electrode second current collector and a negative electrode second current collector. FIG. 7 is a diagram illustrating a configuration of the wound electrode body. In the following explanation, the symbols L, R, F, Rr, U, and D in the figures represent left, right, front, rear, top, and bottom respectively. In the figures, the symbol X represents a "short side direction of the battery", the symbol Y represents a "long side direction of the battery", and the symbol Z represents a "vertical direction of the battery". Note that these symbols are merely directions for convenience of explanation and do not limit the configuration for installing the battery 100 at all.

As illustrated in FIG. 1 and FIG. 2, the battery 100 includes a wound electrode body 20 and a battery case 10 that accommodates the wound electrode body 20. Although not illustrated, the battery 100 further includes an electrolyte in this embodiment. The battery 100 is preferably a nonaqueous electrolyte secondary battery such as a lithium ion secondary battery.

The battery case 10 is a housing for accommodating the wound electrode body 20. The battery case 10 has a bottomed rectangular parallelopiped (square) external shape as illustrated in FIG. 1 in this embodiment. The material for the battery case 10 may be the same as that conventionally used without any particular restrictions. The battery case 10 is preferably made of a metal. Examples of the material for the battery case 10 include aluminum, aluminum alloys, iron, iron alloys, and the like.

As illustrated in FIG. 1 and FIG. 2, the battery case 10 includes an outer jacket 12 and a sealing plate 14. The outer jacket 12 is a flat and bottomed square container having an opening 12h on its top face. The outer jacket 12 includes a bottom wall 12a that is almost rectangular in plan view, a pair of long side walls 12b facing each other and extending from the bottom wall 12a, and a pair of short side walls 12c facing each other and extending from the bottom wall 12a. The short side walls 12c have an area smaller than that of the long side walls 12b. The sealing plate 14 is a plate-like member that closes the opening 12h of the outer jacket 12 and is almost rectangular in plan view. In the battery case 10, the outer jacket 12 and the sealing plate 14 are integrated by joining (e.g. weld bonding) the sealing plate 14 to a peripheral edge of the opening 12h of the outer jacket 12. The battery case 10 is sealed airtight (hermetically sealed).

As illustrated in FIG. 2, the sealing plate 14 includes an injection hole 15, a gas exhaust valve 17, and two terminal withdrawal holes 18 and 19. The injection hole 15 is a through hole for injecting an electrolytic solution into the battery case 10 after the sealing plate 14 is assembled to the outer jacket 12. The injection hole 15 is sealed by a sealing member 16 after injection of the electrolytic solution. The gas exhaust valve 17 is a thin-walled portion configured so as to break when a pressure inside the battery case 10 exceeds a predetermined value, to exhaust a gas inside the battery case 10 to the outside.

The battery case 10 accommodates an electrolyte together with the wound electrode body 20 as described above. As an electrolyte, any electrolytic solution used in conventionally known batteries can be used without any particular restrictions. As an example, a nonaqueous electrolytic solution prepared by dissolving a supporting salt in a nonaqueous solvent can be used. Examples of the nonaqueous solvent include carbonate-based solvents such as ethylene carbonate, dimethyl carbonate, and ethylmethyl carbonate. Examples of the supporting salt include fluorine-containing lithium salts such as LiPF₆. The nonaqueous electrolytic solution may contain various additives as needed. The electrolyte may be in solid form (solid electrolyte) and integrated with the electrode body.

A positive electrode terminal 30 is attached to one end of the sealing plate 14 in the long side direction Y (left side in FIG. 1 and FIG. 2). A negative electrode terminal 40 is attached to the other end of the sealing plate 14 in the long side direction Y (right side in FIG. 1 and FIG. 2). The positive electrode terminal 30 and the negative electrode terminal 40 are inserted through the terminal withdrawal holes 18 and 19 respectively, and exposed on the outer surface of the sealing plate 14. The positive electrode terminal 30 is electrically connected to a plate-like positive electrode external conductive member 32 on the outside of the battery case 10. The negative electrode terminal 40 is electrically connected to a plate-like negative electrode external conductive member 42 on the outside of the battery case 10. The positive electrode external conductive member 32 and the negative electrode external conductive member 42 are connected to another secondary battery or external apparatus via an external connection member such as a bus bar. The positive electrode external conductive member 32 and the negative electrode external conductive member 42 are preferably made of a metal excellent in conductivity, such as aluminum, aluminum alloys, copper, and copper alloys. However, the positive electrode external conductive member 32 and the negative electrode external conductive member 42 are not essential and can be omitted in other embodiments.

As illustrated in FIG. 3 to FIG. 5, the battery 100 has a plurality (three) of wound electrode bodies 20 accommodated in the battery case 10. Each wound electrode body 20 includes positive electrode tab groups 25 and negative electrode tab groups 27 (see FIG. 4), although the detailed structure of the wound electrode bodies 20 will be described later. As illustrated in FIG. 4, these electrode tab groups (positive electrode tab groups 25 and negative electrode tab groups 27) are bent while the electrode current collectors (positive electrode current collector 50 and negative electrode current collector 60) are joined to each other.

The positive electrode tab group 25 of each of the plurality of wound electrode bodies 20 is connected to the positive electrode terminal 30 via the positive electrode current collector 50. The positive electrode current collector 50 is accommodated inside the battery case 10. The positive electrode current collector 50 includes a positive electrode first current collecting member 51 and positive electrode second current collecting members 52, as illustrated in FIG. 2 and FIG. 5. The positive electrode first current collecting member 51 is a plate-like conductive member extending in the long side direction Y along the inner face of the sealing plate 14. The positive electrode second current collecting members 52 are plate-like conductive members extending in the vertical direction Z of the battery 100. A lower end portion 30c of the positive electrode terminal 30 is inserted into the battery case 10 through the terminal withdrawal hole 18 of the sealing plate 14 and connected to the positive electrode first current collecting member 51 (see FIG. 2). As illustrated in FIG. 4 to FIG. 6, the battery 100 includes the positive electrode second current collecting members 52 of which the number corresponds to the number of the wound electrode bodies 20 in this embodiment. Each of the positive electrode second current collecting members 52 is connected to each positive electrode tab group 25 of each wound electrode body 20. As illustrated in FIG. 4, the positive electrode tab groups 25 of the wound electrode bodies 20 are bent such that the positive electrode second current collecting member 52 and a side face 20e of the wound electrode body 20 face each other. Thereby, the upper end portion of the positive electrode second current collecting member 52 is electrically connected to the positive electrode first current collecting member 51. The positive electrode terminal 30 and the positive electrode current collector 50 are preferably made of a metal excellent in electrical conductivity. The positive electrode terminal 30 and the positive electrode current collector 50 may be made of e.g. aluminum or an aluminum alloy.

On the other hand, each negative electrode tab group 27 of the plurality of wound electrode bodies 20 is connected to the negative electrode terminal 40 via the negative electrode current collector 60. Such a connection structure on the negative electrode side is substantially the same as the connection structure on the positive electrode side described above. Specifically, the negative electrode current collector 60 includes a negative electrode first current collecting member 61 and negative electrode second current collecting members 62, as illustrated in FIG. 2 and FIG. 5. The negative electrode first current collecting member 61 is a plate-like conductive member extending along the inner face of the sealing plate 14 in the long side direction Y. The negative electrode second current collecting members 62 are plate-like conductive members extending in the vertical direction Z of the battery 100. A lower end portion 40c of the negative electrode terminal 40 is inserted into the battery case 10 through the terminal withdrawal hole 19 and connected with the negative electrode first current collecting member 61 (see FIG. 2). As illustrated in FIG. 4 to FIG. 6, the battery 100 includes the negative electrode second current collecting members 62 of which the number corresponds to the number of the wound electrode bodies 20 in this embodiment. Each of the negative electrode second current collecting members 62 is connected to each negative electrode tab group 27 of each wound electrode body 20. As illustrated in FIG. 4 and FIG. 5, the negative electrode tab groups 27 of the wound electrode bodies 20 are bent such that the negative electrode second current collecting member 62 and the other side face 20h of the wound electrode body 20 face each other. Thereby, the upper end portion of the negative electrode second current collecting member 62 is electrically connected to the negative electrode first current collecting member 61. The negative electrode terminal 40 and the negative electrode current collector 60 are preferably made of a metal excellent in electrical conductivity. The negative electrode terminal 40 and the negative electrode current collector 60 may be made of e.g. copper or a copper alloy.

Various insulative members are installed in the battery 100 to prevent electric conduction between the wound electrode bodies 20 and the battery case 10. For example, as illustrated in FIG. 1 and FIG. 2, the positive electrode external conductive member 32 and the negative electrode external conductive member 42 are insulated from the sealing plate 14 by an external insulative member 92. As illustrated in FIG. 2, gaskets 90 are attached to each of the terminal withdrawal holes 18 and 19 of the sealing plate 14. This makes it possible to prevent the positive electrode terminal 30 (or negative electrode terminal 40) inserted into the terminal withdrawal hole 18 or 19 from electrically conducting with the sealing plate 14. An internal insulative member 94 is disposed between the positive/negative electrode current collectors 50/60 and the inner face side of the sealing plate 14. Thereby, the positive electrode current collector 50 and the negative electrode current collector 60 can be prevented from electrically conducting with the sealing plate 14. The internal insulative member 94 may have a protruding portion that protrudes toward the wound electrode bodies 20. Furthermore, the plurality of wound electrode bodies 20 are disposed inside the outer jacket 12 while the electrode bodies 20 are covered with an electrode body holder 29 composed of an insulative resin sheet. This makes it possible to prevent the wound electrode bodies 20 and the outer jacket 12 from coming into direct contact with each other. The material for each of the insulative members is not particularly limited as long as the material has a prescribed insulating property. Examples of the material include polyolefin resins such as polypropylene (PP) and polyethylene (PE), fluororesins such as perfluoroalkoxy alkane and polytetrafluoroethylene (PTFE), and other synthetic resin materials.

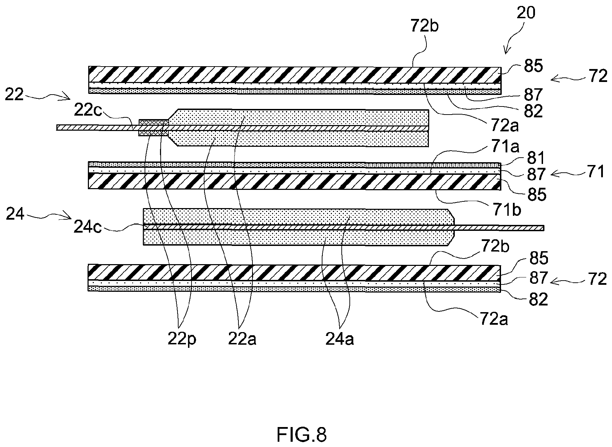

As illustrated in FIG. 3, the outer jacket 12 accommodates three wound electrode bodies 20. However, the number of the wound electrode bodies disposed inside one outer jacket 12 is not particularly limited, and may be four or more, or even one. The wound electrode body 20 includes a strip-shaped first separator 71, a strip-shaped positive electrode sheet 22, a strip-shaped second separator 72, and a strip-shaped negative electrode sheet 24 that are wound together. In this embodiment, the positive electrode sheet 22 and the first separator 71 are bonded via a first adhesive layer 81 (see FIG. 8). The positive electrode sheet 22 and the second separator 72 are bonded via a second adhesive layer 82 (see FIG. 8). The wound electrode body 20 is preferably flat. As illustrated in FIG. 3, for example, the wound electrode body 20 is flat and has a pair of curved portions 20r facing the bottom wall 12a and the sealing plate 14 of the outer jacket 12, and a plane portion 20f connecting the pair of curved portions 20r and facing the long side wall 12b of the outer jacket 12. In this specification, the flat wound electrode body refers to a wound electrode body having an almost elliptical shape i.e. a so-called racetrack shape in sectional view (see FIG. 3).

As illustrated in FIG. 7, the wound electrode body 20 is configured such that the strip-shaped positive electrode sheet 22 and the strip-shaped negative electrode sheet 24 are laminated in an insulated state via the strip-shaped first separator 71 and second separator 72 and wound in the longitudinal direction around a winding axis WL. In this embodiment, the wound electrode body 20 is disposed inside the outer jacket 12 in an orientation where the winding axis WL (see FIG. 7) is parallel to the long side direction Y of the outer jacket 12. In other words, the wound electrode body 20 is disposed inside the outer jacket 12 in an orientation where the winding axis WL is parallel to the bottom wall 12a and orthogonal to the short side walls 12c. The end face of the wound electrode body 20 (i.e. a lamination face where the positive electrode sheet 22 and the negative electrode sheet 24 are laminated) faces the short side walls 12c.

The positive electrode sheet 22 is a strip-shaped member as illustrated in FIG. 7. The positive electrode sheet 22 has a strip-shaped positive electrode current collector 22c, as well as a positive electrode active material layer 22a and a positive electrode protective layer 22p that are fixed to at least one surface of the positive electrode current collector 22c. However, the positive electrode protective layer 22p is not essential and can be omitted in other embodiments. For each member constituting the positive electrode sheet 22, conventionally known materials that can be used in general batteries (e.g. lithium ion secondary batteries) can be used without any particular restrictions. For example, the positive electrode current collector 22c is preferably made of a conductive metal such as aluminum, aluminum alloys, nickel, and stainless steel. In this embodiment, the positive electrode current collector 22c is composed of a metal foil, specifically an aluminum foil.

In the positive electrode sheet 22, as illustrated in FIG. 7, a plurality of positive electrode tabs 22t are disposed on one end (left end in FIG. 7) of the wound electrode body 20 in the long side direction Y. The plurality of positive electrode tabs 22t are arranged in predetermined intervals (intermittently) in the longitudinal direction. The positive electrode tabs 22t are connected to the positive electrode sheet 22. In the present disclosure, the positive electrode tabs 22t are a part of the positive electrode current collector 22c and composed of a metal foil (specifically, aluminum foil). The positive electrode tabs 22t have no positive electrode active material layer 22a, where the positive electrode current collector 22c is exposed. However, the positive electrode tabs 22t may partially have the positive electrode active material layer 22a and/or the positive electrode protective layer 22p, and may be configured separately from the positive electrode current collector 22c. In this embodiment, the plurality of positive electrode tabs 22t each have a trapezoidal shape. However, the shape of the positive electrode tabs 22t is not limited to this shape. Also, a size of the positive electrode tabs 22t is not particularly limited. The shape and size of the positive electrode tabs 22t can be appropriately adjusted e.g. in consideration of the state of the tabs 22t connected to the positive electrode current collector 50 and depending on positions at which the positive electrode tabs 22t are formed, or the like. The plurality of positive electrode tabs 22t are stacked on one end of the positive electrode sheet 22 in the long side direction Y (left end in FIG. 4) to constitute the positive electrode tab group 25, as illustrated in FIG. 4.

The positive electrode active material layer 22a is arranged in a strip-shaped in the longitudinal direction of the strip-shaped positive electrode current collector 22c, as illustrated in FIG. 7. The positive electrode active material layer 22a contains a positive electrode active material (e.g. a lithium-transition metal composite oxide such as lithium-nickel-cobalt-manganese composite oxide) that can reversibly absorb and release charge carriers. The positive electrode active material layer 22a preferably contains a lithium-transition metal composite oxide as the positive electrode active material, and more preferably the lithium-transition metal composite oxide has a high nickel (Ni) content. For example, in the lithium-transition metal composite oxide, the nickel content is preferably 55 mol% or more, more preferably 70 mol% or more, and even more preferably 75 mol% or more based on the total amount of metal elements other than lithium. This allows the battery 100 to have an even higher capacity.

Based on 100% by mass of the total solid content in the positive electrode active material layer 22a, the positive electrode active material may account for approximately 80% by mass or more, typically 90% by mass or more, for example 95% by mass or more. The positive electrode active material layer 22a may contain any components other than the positive electrode active material, e.g. various additive components such as conductive materials and binders. Examples of the conductive materials include carbon materials such as acetylene black (AB). Examples of the binders include fluororesins such as polyvinylidene fluoride (PVdF).

Although not particularly limited, when a weight of the positive electrode active material layer 22a per a unit area is defined as 'a' (g) and a content of moisture generated by heating the positive electrode active material layer 22a from 150°C to 300°C is 'b' (g), it is preferable that a ratio of the moisture content b to the weight a (b/a) is lower than 0.2%.

The positive electrode protective layer 22p is configured so as to have a lower electrical conductivity than of the positive electrode active material layer 22a. As illustrated in FIG. 7, the positive electrode protective layer 22p is placed on a boundary portion between the positive electrode current collector 22c and the positive electrode active material layer 22a in the long side direction Y. In this embodiment, the positive electrode protective layer 22p is placed on one end of the positive electrode current collector 22c in the long side direction Y (left end in FIG. 7). However, the positive electrode protective layer 22p may be placed on both ends in the long side direction Y. The positive electrode protective layer 22p makes it possible to prevent the positive electrode current collector 22c and a negative electrode active material layer 24a from coming into direct contact with each other to cause an internal short circuit in the battery 100 when the first separator 71 and the second separator 72 are broken.

The positive electrode protective layer 22p contains insulative inorganic filler e.g. ceramic particles such as alumina. Based on 100% by mass of the total solid content in the positive electrode active material layer 22p, the inorganic filler may account for approximately 50% by mass or more, typically 70% by mass or more, for example 80% by mass or more. The positive electrode protective layer 22p may contain any components other than the inorganic filler, e.g. various additive components such as conductive materials and binders. The conductive materials and binders may be the same as those described as possible to be contained in the positive electrode active material layer 22a as an example.

The negative electrode sheet 24 is a strip-shaped member as illustrated in FIG. 7. The negative electrode sheet 24 has a strip-shaped negative electrode current collector 24c and the negative electrode active material layer 24a fixed to at least one surface of the negative electrode current collector 24c. For each member constituting the negative electrode sheet 24, a conventionally known material available for general batteries (e.g. lithium ion secondary batteries) can be used without any particular restrictions. For example, the negative electrode current collector 24c is preferably made of a conductive metal such as copper, copper alloys, nickel, and stainless steel. In this embodiment, the negative electrode current collector 24c is composed of a metal foil, specifically a copper foil.

In the negative electrode sheet 24, as illustrated in FIG. 7, a plurality of negative electrode tabs 24t are disposed on one end (right end in FIG. 7) of the wound electrode body 20 in the long side direction Y. The plurality of negative electrode tabs 24t are arranged at predetermined intervals (intermittently) in the longitudinal direction. The negative electrode tabs 24t are connected to the negative electrode sheet 24. In this embodiment, the negative electrode tabs 24t are a part of the negative electrode current collector 24c and composed of a metal foil (specifically, copper foil). In this embodiment, the negative electrode tabs 24t have no negative electrode active material layer 24a, where the negative electrode current collector 24c is exposed. However, the negative electrode tabs 24t may partially have the negative electrode active material layer 24a, and may be configured separately from the negative electrode current collector 24c. In this embodiment, the plurality of negative electrode tabs 24t each have a trapezoidal shape. However, the shape and the size of the negative electrode tabs 24t can be adjusted as appropriate in the same manner as for the positive electrode tabs 22t. The plurality of negative electrode tabs 24t are stacked on one end of the negative electrode sheet 24 in the long side direction Y (right end in FIG. 4) to constitute the negative electrode tab group 27, as illustrated in FIG. 4.

The negative electrode active material layer 24a is arranged in a strip-shaped in the longitudinal direction of the strip-shaped negative electrode current collector 24c, as illustrated in FIG. 7. The negative electrode active material layer 24a contains a negative electrode active material that can reversibly absorb and release charge carriers (e.g. a carbon material such as graphite). The width of the negative electrode active material layer 24a (refers to the length in the long side direction Y. The same applies to the following.) is preferably larger than the width of the positive electrode active material layer 22a. Based on 100% by mass of the total solid content in the negative electrode active material layer 24a, the negative electrode active material may account for approximately 80% by mass or more, typically 90% by mass or more, for example 95% by mass or more. The negative electrode active material layer 24a may contain optional components other than the negative electrode active material, e.g. various additive components such as conductive materials, binders, and dispersants. Examples of the binders include rubbers such as styrene-butadiene rubber (SBR). Examples of the dispersants include celluloses such as carboxymethylcellulose (CMC).

The first separator 71 and the second separator 72 are strip-shaped members. The first separator 71 and the second separator 72 are composed of an insulative sheet having a plurality of fine through holes through which the charge carriers can pass. The first separator 71 and second separator 72 have a width larger than the width of the negative electrode active material layer 24a. The first separator 71 and the second separator 72 are interposed between the positive electrode sheet 22 and the negative electrode sheet 24, so that the positive electrode sheet 22 and the negative electrode sheet 24 can be prevented from coming into contact with each other, and charge carriers (e.g., lithium ions) can be transferred to between the positive electrode sheet 22 and the negative electrode sheet 24.

FIG. 8 is a schematic enlarged view illustrating interfaces between the positive electrode sheet 22, the negative electrode sheet 24, the first separator 71, and the second separator 72 of the wound electrode body 20. As described above, in the battery 100 disclosed herein, the positive electrode sheet 22 and the first separator 71 are bonded via the first adhesive layer 81, and the positive electrode sheet 22 and the second separator 72 are bonded via the second adhesive layer 82. The first adhesive layer 81 may be placed on the surface of the first separator 71, which faces the positive electrode sheet 22. Alternatively, the first adhesive layer 81 may be placed on the surface of the positive electrode sheet 22, which faces the first separator 71. The second adhesive layer 82 may be placed on the surface of the second separator 72, which faces the positive electrode sheet 22.
Alternatively, the second adhesive layer 82 may be placed on the surface of the positive electrode sheet 22, which faces the second separator 72. The "surface of the positive electrode sheet" may be the surface of the positive electrode active material layer or the surface of the positive electrode current collector. When the first adhesive layer and/or the second adhesive layer are placed on the surface of the positive electrode sheet, it is preferable that the positive electrode sheet has the positive electrode active material layers on both faces of the positive electrode current collector, and the first adhesive layer and/or the second adhesive layer are placed on the surface of the positive electrode active material layer.

The positions of the first adhesive layer 81 and the second adhesive layer 82 are not particularly limited as long as the positive electrode sheet 22, the first separator 71, and the second separator 72 can be bonded via the first adhesive layer 81 and the second adhesive layer 82. For example, the first adhesive layer 81 may be placed on the surface of the positive electrode sheet 22, which faces the first separator 71, and the second adhesive layer 82 may be placed on the surface of the positive electrode sheet 22, which faces the second separator 72. It is preferable that the first adhesive layer 81 is placed on the surface of the first separator 71, which faces the positive electrode sheet 22, and the second adhesive layer 82 may be placed on the surface of the positive electrode sheet 22, which faces the second separator 72. It is more preferable that the first adhesive layer 81 is placed on the surface of the first separator 71, which faces the positive electrode sheet 22, and the second adhesive layer 82 is placed on the surface of the second separator 72, which faces the positive electrode sheet 22. Thereby, the adhesiveness via the first adhesive layer 81 and the second adhesive layer 82 can be more suitably exhibited.

In the configuration in which the first adhesive layer 81 is placed on the surface of the first separator 71, the first adhesive layer 81 should be placed on the top surface of the first separator 71. In the configuration in which the second adhesive layer 82 is placed on the surface of the second separator 72, the second adhesive layer 82 should be placed on the top surface of the second separator 72. Although not particularly limited, preferably the first separator 71 has e.g. a base layer 85, a heat-resistant layer 87 placed on the base layer 85, and the first adhesive layer 81 placed on the heat-resistant layer 87. Preferably, the second separator 72 has e.g. the base layer 85, the heat-resistant layer 87 placed on the base layer 85, and the second adhesive layer 82 placed on the heat-resistant layer 87. However, each of the first adhesive layer 81 and the second adhesive layer 82 may be placed directly on the surface of the base layer 85. Alternatively, the first adhesive layer 81 and the second adhesive layer 82 may be placed on the base layer 85 over any other layer.

For the base layer 85, a microporous film used for conventionally known battery separators may be used without any particular restrictions. For example, the base layer 85 is preferably a porous sheet-like member. The base layer 85 may have a single-layer structure, a multiple-layer structure, e.g. a three-layer structure. The base layer 85 is preferably made of a polyolefin resin. Thereby, sufficient flexibility of the separator can be ensured to facilitate the fabrication (winding and press forming) of the wound electrode body 20. The polyolefin resin is preferably polyethylene (PE), polypropylene (PP), or a mixture thereof, and PE is more preferable. Although not particularly limited, a thickness of the base layer 85 is preferably 3 µm or larger and 25 µm or smaller, more preferably 3 µm or larger and 18 µm or smaller, and even more preferably 5 µm or larger and 14 µm or smaller.

In this embodiment, the heat-resistant layer 87 is placed on the base layer 85. The heat-resistant layer 87 may be placed on the surface of the base layer 85 directly or over other layers. However, the heat-resistant layer 87 is not essential and may be omitted in other embodiments. A weight per area of the heat-resistant layer 87 is homogeneous in the longitudinal and width directions of the separator in this embodiment. Although not particularly limited, a thickness of the heat-resistant layer 87 is preferably between 0.3 µm or larger and 6 µm or smaller, more preferably between 0.5 µm or larger and 6 µm or smaller, and even more preferably 1 µm or larger and 4 µm or smaller.

Preferably, the heat-resistant layer 87 contains an inorganic filler and a heat-resistant layer binder. As the inorganic filler, a filler conventionally known and used for this type of application can be used without any particular restrictions. The inorganic filler preferably contains insulative ceramic particles. Above all, in consideration of heat resistance, availability, and the like, inorganic oxides such as alumina, zirconia, silica, and titania, metal hydroxides such as aluminum hydroxide, and clay minerals such as boehmite are preferable, and alumina and boehmite are more preferable. From the viewpoint of suppressing thermal shrinkage of the separator, compounds containing aluminum are particularly preferable. A ratio of the inorganic filler to the total mass of the heat-resistant layer 87 is preferably 80% by mass or higher, more preferably 90% by mass or higher, and even more preferably 95% by mass or higher.

As the heat-resistant layer binder, a binder conventionally known and used for this type of application can be used without any particular restrictions. Specific examples of the binder include acrylic resins, fluororesins, epoxy resins, urethane resins, ethylene-vinyl acetate resins, and the like. Above all, acrylic resins are preferable.

The first adhesive layer 81 and the second adhesive layer 82 are bonded with the electrodes (positive electrode sheet 22 and/or negative electrode sheet 24) e.g. by heating and pressing (typically, press forming). The first adhesive layer 81 and the second adhesive layer 82 may have the same configuration or different configurations.

The first adhesive layer 81 and the second adhesive layer 82 contain an adhesive layer binder. As the adhesive layer binder, a conventionally known resin material having a certain viscosity for the electrodes can be used without any particular restrictions. Specific examples of the binder include acrylic resins, fluororesins, epoxy resins, urethane resins, ethylene-vinyl acetate resins, and the like. Above all, fluororesins and acrylic resins are preferable because they have high flexibility and can exhibit more suitable adhesiveness for the electrodes. Examples of fluororesins include polyvinylidene fluoride (PVdF), polytetrafluoroethylene (PTFE), and the like. The type of the adhesive layer binder may be the same as or different from that of the heat-resistant layer binder. A ratio of the adhesive layer binder to the total mass of the adhesive layer is preferably 25% by mass or higher, more preferably 50% by mass or higher, and even more preferably 80% by mass or higher. Thereby, a prescribed adhesiveness for the electrodes is properly exhibited.

The first adhesive layer 81 and the second adhesive layer 82 may contain other materials (e.g. inorganic filler described as a component of the heat-resistant layer 87) in addition to the adhesive layer binder. When the adhesive layer contains the inorganic filler, a ratio of the inorganic filler to the total mass of the adhesive layer is preferably 75% by mass or lower, more preferably 50% by mass or lower, and even more preferably 20% by mass or lower. The thicknesses of the first adhesive layer 81 and the second adhesive layer 82 are preferably approximately 0.3 µm or larger and 6 µm or smaller, more preferably 0.5 µm or larger and 6 µm or smaller, and even more preferably 1 µm or larger and 4 µm or smaller.

As illustrated in FIG. 8, the first separator 71 has a first face 71a and a second face 71b. In this embodiment, the first face 71a of the first separator 71 and one surface of the positive electrode sheet 22 face each other, and the second face 71b and one surface of the negative electrode sheet 24 face each other. The second separator 72 has a third face 72a and a fourth face 72b. In this embodiment, the third face 72a of the second separator 72 and the other surface of the positive electrode sheet 22 face each other, and the fourth face 72b and the other surface of the negative electrode sheet 24 face each other.

It is preferable that, as illustrated in FIG. 8, the first face 71a of the first separator 71 has the first adhesive layer 81 and is bonded to one face of the positive electrode sheet 22. Although not particularly limited, a weight per area 'A' (g/m²) of the adhesive layer on the first face 71a is preferably 0.005 to 1.0 g/m², more preferably 0.02 to 0.04 g/m². However, the first adhesive layer 81 is not necessarily placed on the entire area of the first face 71a. That means, the first face 71a may have an adhesive layer-unformed area where no adhesive layer is formed.

It is preferable that, as illustrated in FIG. 8, the third face 72a of the second separator 72 has the second adhesive layer 82 and is bonded to the other face of the positive electrode sheet 22. Although not particularly limited, a weight per area 'C' (g/m²) of the adhesive layer on the third face 72a is preferably 0.005 to 1.0 g/m², more preferably 0.02 to 0.04 g/m². However, the second adhesive layer 82 is not necessarily placed on the entire area of the third face 72a. That means, the third face 72a may have an adhesive layer-unformed area where no adhesive layer is formed.

The second face 71b of the first separator 71 may or may not have the adhesive layer. When the adhesive layer is formed on the second face 71b of the first separator 71, it is preferable that the adhesive layer on the second face 71b has a weight per area 'B' (g/m²) less than the weight per area 'A' (g/m²) of the adhesive layer on the first face 71a. For example, a ratio of the weight per area B of the adhesive layer on the second face 71b to the weight per area A of the adhesive layer on the first face 71a (B/A) is preferably 0.5 or lower, more preferably 0.25 or lower, particularly preferably 0.1 or lower. Although not particularly limited, when the adhesive layer is formed on the second face 71b, the weight per area B of the adhesive layer is preferably 0.002 to 0.5 g/m², more preferably 0.01 to 0.02 g/m².

The fourth face 72b of the second separator 72 may or may not have the adhesive layer. When the adhesive layer is formed on the fourth face 72b of the second separator 72, it is preferable that the adhesive layer on the fourth face 72b has a weight per area 'D' (g/m²) less than the weight per area 'C' (g/m²) of the adhesive layer on the third face 72a. For example, a ratio of the weight per area D of the adhesive layer on the fourth face 72b to the weight per area C of the adhesive layer on the third face 72a (D/C) is preferably 0.5 or lower, more preferably 0.25 or lower, particularly preferably 0.1 or lower. Although not particularly limited, when the adhesive layer is formed on the fourth face 72b, the weight per area D of the adhesive layer is preferably 0.002 to 0.5 g/m², more preferably 0.01 to 0.02 g/m².

The adhesive layer may be formed on the entire face or may be formed in a predetermined pattern. For example, the adhesive layer may have, in plan view, a dot pattern, a stripe pattern, a wavy pattern, a belt (streak) pattern, a dashed line pattern, a combination thereof, or the like.

### <Method for Manufacturing Battery>

As described above, the configuration of the battery 100 according to this embodiment has been explained. Next, a method for manufacturing this battery 100 will be explained.

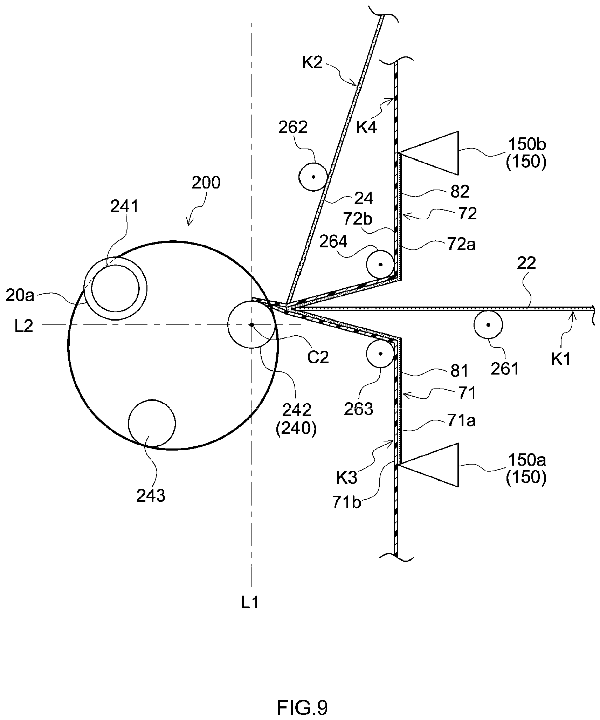

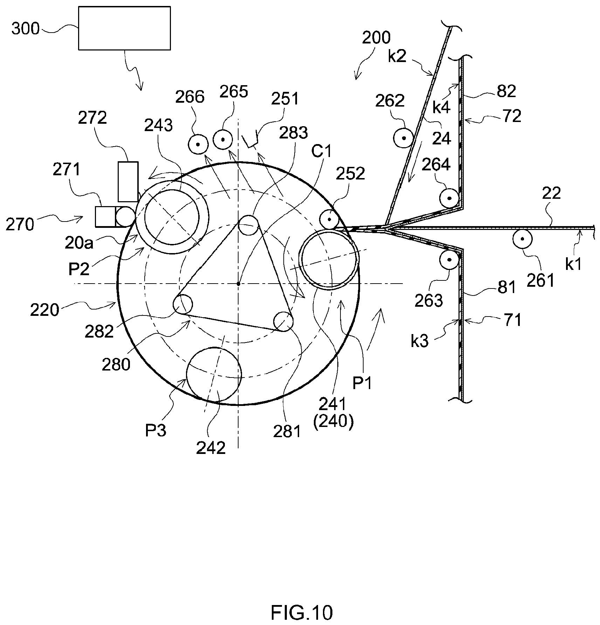

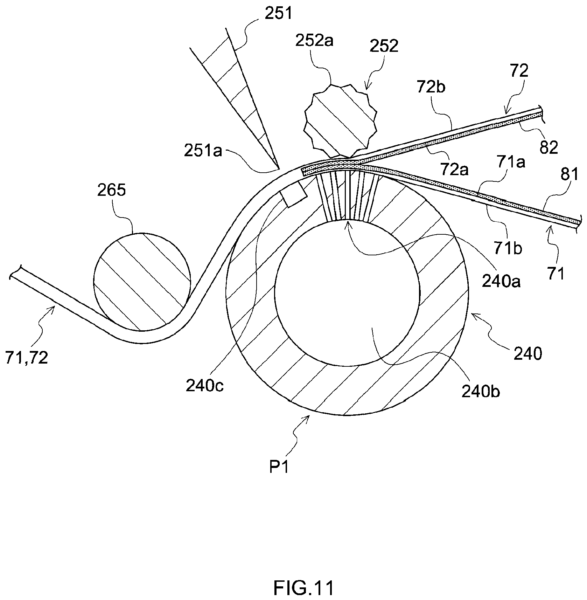

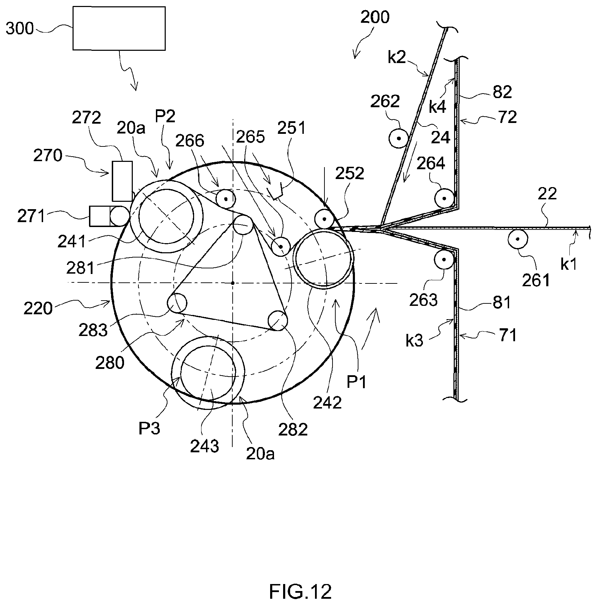

FIG. 9 is a schematic diagram illustrating the manufacturing method disclosed herein. FIG. 10 and FIG. 12 are schematic diagrams illustrating a winding machine 200 that can be suitably used in the manufacturing method disclosed herein. FIG. 11 is a schematic sectional view illustrating a winding core. First, the configuration of the winding machine 200 will be explained with reference to FIG. 10.

As illustrated in FIG. 10, the winding machine 200 is a device for winding the strip-shaped first separator 71, the strip-shaped positive electrode sheet 22, the strip-shaped second separator 72, and the strip-shaped negative electrode sheet 24. As illustrated in FIG. 10, the winding machine 200 includes a turret 220, a plurality of winding cores (first winding core 241, second winding core 242, and third winding core 243), a cutter 251, a pressing jig 252, a plurality of rollers 261 to 266, a winding stopper 270, and a controller 300. The turret 220 further includes an index unit 280, and the index unit 280 includes a plurality of index rollers 281 to 283. Each component of the winding machine 200 has a required actuator where appropriate. The controller 300 is configured to control each component of the winding machine 200 such that a desired operation is executed at a predetermined timing in accordance with a preset program. The controller 300 can be embodied by a computer such as a microcontroller.

The positive electrode sheet 22, the negative electrode sheet 24, the first separator 71, and the second separator 72 are each prepared while wound around a reel (not illustrated) or the like. The positive electrode sheet 22, the negative electrode sheet 24, the first separator 71, and the second separator 72 are conveyed along predetermined conveyance routes k1 to k4 respectively. The conveyance route k1 is a route through which the positive electrode sheet 22 is fed from the reel not illustrated toward the turret 220. The conveyance route k2 is a route through which the negative electrode sheet 24 is fed from the reel not illustrated toward the turret 220. The conveyance route k3 is a route through which the first separator 71 is fed from the reel not illustrated toward the turret 220. The conveyance route k4 is a route through which the second separator 72 is fed from the reel not illustrated toward the turret 220. Preferably, the conveyance route k1 for the positive electrode sheet 22 joins the conveyance route k3 for the first separator 71 and the conveyance route k4 for the second separator 72 before reaching the winding core 241 disposed on a first position P1. Preferably, the positive electrode sheet 22, the first separator 71, and the second separator 72 are be bonded via adhesive layers (more specifically, the first adhesive layer 81 and the second adhesive layer 82) formed in an adhesive layer formation step described later. Preferably, the conveyance route k1 for the negative electrode sheet 24 joins the conveyance route k4 for the second separator 72 before reaching the winding core 241 disposed on the first position P1. Preferably, each of the conveyance routes k1 to k4 has a dancer roll mechanism for eliminating looseness of the fed positive electrode sheet 22, negative electrode sheet 24, first separator 71, and second separator 72, a tensioner for adjusting tension, or the like, as appropriate.

The turret 220 is a rotary disc with a rotary shaft set at a center C1. As illustrated in FIG. 10, the turret 220 has the plurality (three, in this embodiment) of winding cores (first winding core 241, second winding core 242, and third winding core 243). Note that the first winding core 241, the second winding core 242, and the third winding core 243 are hereinafter referred to as a winding core 240 when they are not particularly distinguished. When the first winding core 241, the second winding core 242, and the third winding core 243 are distinguished from each other, they are distinguished as the first winding core 241, the second winding core 242, and the third winding core 243 as appropriate. The plurality of winding cores 240 are independently a rotatable and almost cylindrical shafts. In this embodiment, the shafts of the winding cores 240 are each parallel to the central axis of the turret 220. The first winding core 241, the second winding core 242, and the third winding core 243 are arranged around the central axis of the turret 220 at equal intervals in the circumferential direction. Preferably, the first winding core 241, the second winding core 242, and the third winding core 243 have a same configuration. Although not illustrated, the turret 220 includes a desirable actuator (e.g. servo motor) and rotates at an appropriate angle and at an appropriate timing.

The first position P1, a second position P2, and a third position P3 are previously set around the center C1 of the turret 220. In FIG. 10, the first winding core 241 is located at the first position P1, the third winding core 243 is located at the second position P2, and the second winding core 242 is located at the third position P3. However, the positions of the first winding core 241, the second winding core 242, and the third winding core 243 are not fixed to the positions illustrated in FIG. 10. In this embodiment, the turret 220 rotates counterclockwise as indicated by the arrow. Each of the first winding core 241, the second winding core 242, and the third winding core 243 also rotates counterclockwise as indicated by the arrow. The first winding core 241, the second winding core 242, and the third winding core 243 sequentially move across the first position P1, the second position P2, and the third position P3 by the rotation of the turret 220. Although not illustrated, the first winding core 241, the second winding core 242, and the third winding core 243 have a desirable actuator (e.g. servo motor) to rotate at an appropriate speed and timing.

FIG. 11 is a schematic sectional view illustrating the winding core 240 located at the first position P1. The winding core 240 is an almost cylindrical member. In this embodiment, although the winding core 240 is an almost cylindrical shape, a flat winding core may be used when the electrode body is wound into a flat shape. The winding core may be divided in the radial direction, and the diameter of the winding core may be variable.

FIG. 11 is a diagram viewed in the axial direction of the winding core 240, schematically illustrating the first separator 71 and the second separator 72 wound around the winding core 240 located at the first position P1. The winding core 240 functionally holds the first separator 71 and the second separator 72 that are wound around its side peripheral face. In this embodiment, the winding core 240 has suction holes 240a, a suction path 240b, and a groove 240c. The suction holes 240a are intended to adsorb the first separator 71 and/or the second separator 72 that are wound around the side peripheral face of the winding core. The suction holes 240a may have a circular shape or a square shape in plan view. Alternatively, the suction holes 240a may have a slit shape. The suction path 240b is a flow channel formed inside the winding core 240 and leading to the suction holes 240a. The suction path 240b is a flow channel for generating a negative pressure in the suction holes 240a. Preferably, the suction path 240b is configured to be connected to an externally installed vacuum line (not illustrated) as appropriate to generate a negative pressure. In this embodiment, the groove 240c is formed in the axial direction of the winding core 240 on the outer peripheral face of the winding core 240. The groove 240c can functionally serve as a receiving portion on which a blade 251a of the cutter 251 abuts against when cutting the first separator 71 and the second separator 72 in the cutting process described later. This function makes it possible to prevent damage of the winding core 240 or the cutter 251 due to contact between the winding core 240 and the blade 251a of the cutter 251.

The cutter 251 is intended to cut the first separator 71 and the second separator 72. The cutter 251 is an example of a cutting jig. Preferably, the cutter 251 is configured such that the blade 251a is pressed against the first separator 71 and the second separator 72 held by the winding core 240 located at the first position P1 to cut the first separator 71 and the second separator 72. The cutter 251 can be configured to be, along a guide, pressed forward to or retracted from a position designated for the blade 251a to be pressed against the separators held by the winding core 240. Although not illustrated, the cutter 251 is operated to act by an actuator (e.g. cylinder mechanism) at an appropriate timing. The blade 251a, for example, can be a wavy blade (saw blade).

The pressing jig 252 is intended to press the first separator 71 and the second separator 72 against the winding core 240 located at the first position P1. This pressing jig 252 allows the first separator 71 and the second separator 72 to be pressed against and wound around the winding core 240 located at the first position P1. Although not particularly limited, the pressing jig 252 is preferably configured to press the fourth face 72b of the second separator 72 immediately after the first separator 71 and the second separator 72 begin to be wound around the winding core 240 (e.g. at a stage where about one or two laps have been wound). Preferably, the pressing jig 252 is configured to press the first separator 71 and the second separator 72 against the winding core 240 located at the first position P1 with an appropriate pressure, e.g. by a mechanism incorporating a spring or the like. Although not illustrated, the guide and the actuator cause the pushing jig 252 to move to a position to be pressed against the first separator 71 and the second separator 72 wound around the winding core 240 located at the first position P1 and move to a position away from the winding core 240. One pressing jig 252 may be disposed in the width direction of the winding core 240, or a plurality of pressing jigs 252 may be intermittently arranged in the width direction of the winding core 240.

For example, preferably, the pressing jig 252 is a roller as illustrated in FIG. 11. More preferably, the pressing jig 252 is a roller having a plurality of protrusions 252a formed on its outer peripheral face. In this way, when the two separators: first separator 71 and second separator 72 are pressed against the winding core 240 by the pressing jig 252 having the protrusions 252a, the force is locally concentrated by the protrusions 252a to strongly press the first separator 71 and the second separator 72. As a result, the first separator 71 and the second separator 72 are more suitably pressure-bonded to each other. For example, preferably, the pressing roller has an almost cylindrical shape and is knurled on its side peripheral face.

The plurality of rollers 261 to 264 are disposed on the conveyance routes K1 to K4 of the positive electrode sheet 22, the negative electrode sheet 24, the first separator 71, and the second separator 72 respectively. The plurality of rollers 261 to 264 are an example of a conveyer. The plurality of rollers 261 to 264 are located at predetermined positions for defining the conveyance routes k1 to k4 respectively. The positive electrode sheet 22, the negative electrode sheet 24, the first separator 71, and the second separator 72 are conveyed by the plurality of rollers 261 to 264 respectively.

The index unit 280 is disposed at the center of the turret 220, as illustrated in FIG. 10. The turret 220 has three winding cores 241 to 243 arranged at equal intervals in the circumferential direction, as described above. The index unit 280 has an almost equilateral triangular base that rotates together with the turret 220. Each of the index rollers 281 to 283 is disposed at each apex of the base and disposed between two of the three winding cores 241 to 243.

FIG. 12 illustrates a state that the winding core (in this embodiment, the first winding core 241) wound with the positive electrode sheet 22 and the negative electrode sheet 24 moves to the second position P2, another winding core (in this embodiment, the second winding core 242) moves to the first position P1, and the first separator 71 and the second separator 72 are cut. In the index unit 280, when the winding core 241 wound with the positive electrode sheet 22, the first separator 71, the negative electrode sheet 24, and the second separator 72 moves from the first position P1 to the second position P2, the index roller 281 located between the first position P1 and the second position P2 among the index rollers 281 to 283 as illustrated in FIG. 12 presses the first separator 71 and the second separator 72 from the inner diameter side. The index roller 281 and the roller 266 feed the first separator 71 and the second separator 72 between the first position P1 and the second position P2 without looseness. Although the index roller 281 presses the first separator 71 and the second separator 72 from the inner diameter side at the timing in FIG. 12, the index unit 280 rotates together with the rotation of the turret 220. Thus, when the winding core 240 wound with the positive electrode sheet 22, the first separator 71, the negative electrode sheet 24, and the second separator 72 moves from the first position P1 to the second position P2, the index rollers 281 to 283 of the index unit 280 sequentially work as a roller that presses the first separator 71 and the second separator 72 from the inner diameter side.

For example, as illustrated in FIG. 12, the winding core 241 wound with the positive electrode sheet 22, the first separator 71, the negative electrode sheet 24, and the second separator 72 moves to the second position P2 away from the first position P1.
Subsequently, the first separator 71 and the second separator 72 are cut, and then the cut first separator 71 and second separator 72 are wound up to the cut end thereof. The winding stopper 270 is located at the second position P2. The winding stopper 270 has e.g. a pressing roller 271 and a tape attaching device 272. When the winding core 240 that has moved to the second position P2 is wound with the cut positive electrode sheet 22, first separator 71, negative electrode sheet 24, and second separator 72 up to the cut end thereof, the pressing roller 271 is pressed against the outermost second separator 72 wound around the winding core 241. As a result, the cut positive electrode sheet 22, first separator 71, negative electrode sheet 24, and second separator 72 are wound without looseness. The tape attaching device 272 is intended to attach a tape for fixing the cut end of the outermost second separator 72 or the first separator 71. This process of stopping the winding may be executed e.g. in parallel with the process of winding the first separator 71, the positive electrode sheet 22, the second separator 72, and the negative electrode sheet 24 around the winding core 242 newly located at the first position P1.

In this embodiment, for example, as illustrated in FIG. 12, in the winding machine 200, the turret 220 rotates after the winding stopping process has been completed and the positive electrode sheet 22, the first separator 71, the negative electrode sheet 24, and the second separator 72 have been newly wound around the winding core 242 located at the first position P1. The winding core 241 which has undergone the winding stopping process moves to the third position P3, the winding core 242 moves to the second position P2, and further another winding core is located at the first position P1. At this time, the first separator 71 and the second separator 72 wound around the winding core 242 located at the second position P2 are held on the outer peripheral face of the winding core 243 located at the first position P1 while the first separator 71 and the second separator 72 are connected to each other. After the first separator 71 and the second separator 72 are cut, the winding stopping process for the winding core 242 is executed at the second position P2. At the first position P1, the winding core 243 is newly wound with the positive electrode sheet 22, the first separator 71, the negative electrode sheet 24, and the second separator 72. At the third position P3, a wound body 20a is taken out from the winding core 241. After being taken out, the wound body 20a is pressed into a flat shape and can be treated as the wound electrode body 20. In this way, the winding cores 241 to 243 disposed on the turret 220 sequentially move across the first position P1 to the third position P3. The positive electrode sheet 22, the first separator 71, the negative electrode sheet 24, and the second separator 72 are sequentially wound around the winding cores 241 to 243.

The method for manufacturing the battery disclosed herein includes at least an adhesive layer formation step and a wound electrode body fabrication step.

In the adhesive layer formation step, the first adhesive layer 81 is formed on a surface of at least one of the positive electrode sheet 22 and the first separator 71, and the second adhesive layer 82 is formed on a surface of at least one of the positive electrode sheet 22 and the second separator 72.

In the wound electrode body fabrication step, the wound electrode body 20 is fabricated by winding the strip-shaped first separator 71, the strip-shaped positive electrode sheet 22, the strip-shaped second separator 72, and the strip-shaped negative electrode sheet 24.

In the method for manufacturing the battery disclosed herein, the wound electrode body fabrication step is executed immediately after the adhesive layer formation step. Thereby, the position at which the adhesive layer is formed can be controlled, and the adhesive layer can be located at a more appropriate position on the wound electrode body 20. Among the positive electrode sheet 22, the first separator 71, and the second separator 72, a sheet where the adhesive layer has been formed is continuously fed to the winding core without being wound around the reel or the like, to fabricate the wound electrode body 20. Thus, the wound electrode body 20 is fabricated immediately after the adhesive layer is formed. This makes it possible to fabricate the wound electrode body 20 in which the positive electrode sheet 22, the first separator 71, and the second separator 72 are bonded together with higher quality. As a result, the highly reliable battery 100 with the wound electrode body 20 having a high shape stability can be provided.

As described above, the manufacturing method disclosed herein is characterized in that the wound electrode body fabrication step is executed immediately after the adhesive layer formation step. The manufacturing method disclosed herein is characterized in that the wound electrode body fabrication step is executed immediately after the adhesive layer formation step, and other manufacturing processes may be the same as the conventional processes. Furthermore, other steps may be included at any stages.

As illustrated in FIG. 9, in the manufacturing method disclosed herein, for example, an applicator 150 forms the first adhesive layer 81 on the first separator 71 and the second adhesive layer 82 on the second separator 72, and then the first separator 71 and the second separator 72 are wound around the winding machine 200 (more specifically, the winding core 240) without being wound around the reel or the like, to fabricate the wound electrode body 20. In other words, the adhesive layer formation step and the electrode body fabrication step are successively executed while the first separator 71 and the second separator 72 are conveyed along the conveyance routes K3 and K4 respectively. Thereby, the wound electrode body 20 having a high-quality adhesive layer can be fabricated at a desired position. As a result, the positive electrode sheet 22, the first separator 71, and the second separator 72 can be suitably bonded to each other to provide the highly reliable battery 100.

Preferably, a distance between the position at which the adhesive layer is formed and the position at which the wound electrode body 20 is fabricated is less than 50 m. For example, a distance between the applicator 150 for forming the adhesive layer and the winding machine 200 for fabricating the wound electrode body 20 as illustrated in FIG. 9 is preferably less than 50 m, or less than 10 m, or less than 3 m. A time from the formation of the adhesive layer on the positive electrode sheet 22 and/or the separator to the start of the winding for fabricating the wound electrode body 20 is e.g. preferably shorter than 60 minutes, or shorter than 20 minutes, or shorter than 5 minutes. The position at which the adhesive layer is formed and the position at which the wound electrode body 20 is fabricated may be changed as appropriate depending on e.g. a thickness, a type, and the like of the desired adhesive layer.

In the adhesive layer formation step, the first adhesive layer 81 and the second adhesive layer 82 are formed using the applicator 150, as illustrated in FIG. 9. For example, a first applicator 150a for forming the first adhesive layer 81 and a second applicator 150b for forming the second adhesive layer 82 are disposed on each side of a vertical straight line L1 extending across a center C2 of the winding core 242 in the vertical direction. In the manufacturing method disclosed herein, the first adhesive layer 81 and the second adhesive layer 82 are formed such that one surface of the positive electrode sheet 22 and one surface of the first separator 71 are bonded via the first adhesive layer 81, and the other surface of the positive electrode sheet 22 and one surface of the second separator 72 are bonded via the second adhesive layer 82. For example, the first adhesive layer 81 is formed on the surface (in this embodiment, the first face 71a) of the first separator 71, which faces the positive electrode sheet 22. Alternatively, the first adhesive layer 81 is formed on the surface of the positive electrode sheet 22, which faces the first separator 71. The second adhesive layer 82 is formed on the surface (in this embodiment, the third face 72a) of the second separator 72, which faces the positive electrode sheet 22. Alternatively, the second adhesive layer 82 is formed on the surface of the positive electrode sheet 22, which faces the second separator 72. That means, the first adhesive layer 81 and the second adhesive layer 82 may be each formed on both surfaces of the positive electrode sheet 22.

From the viewpoint of keeping the formed adhesive layers more suitable, it is preferable that the adhesive layers are formed on the faces not in contact with the plurality of rollers 261 to 264. Thus, for example, it is preferred that the first adhesive layer 81 is formed on the first face 71a of the first separator 71 and the second adhesive layer 82 is formed on the third face 72a of the second separator 72. Alternatively, it is preferred that the first adhesive layer 81 is formed on the first face 71a of the first separator 71 and the second adhesive layer 82 is formed on the face of the positive electrode sheet 22, which faces the second separator 72.

Although the method for forming the adhesive layer is not particularly limited, the adhesive layer can be formed e.g. by application of a binder liquid from the applicator 150 in the conveyance directions of the positive electrode sheet 22, the first separator 71, and the second separator 72. The binder liquid contains e.g. an adhesive layer binder as described above and a solvent. As a solvent for the binder liquid, a so-called aqueous solvent is suitably used from the viewpoint of reducing the environmental load. In this case, water or a water-based mixed solvent can be used. As solvent components other than water, constituting such a mixed solvent, one or a plurality of organic solvents (lower alcohols, lower ketones, etc.) that can be homogeneously mixed with water can be selected as appropriate for use. For example, it is preferable to use an aqueous solvent containing 80% by mass or more (more preferably 90% by mass or more, more preferably 95% by mass or more) of water. For example, an aqueous solvent consisting substantially of water is particularly preferable. The solvent of the binder liquid is not limited to the so-called aqueous solvent but may also be a so-called organic solvent. Examples of the organic solvent include N-methylpyrrolidone and the like. As a suitable example, the binder liquid may be a mixture of water as a solvent and an acrylic resin (e.g. polymethacrylate resin) as a binder. For the purpose of improving wettability of the positive electrode sheet 22 and the separators, or the like, the binder liquid may contain one or a plurality of additives such as known thickeners and surfactants, unless the effect of the technology disclosed herein is impaired.

The binder liquid is applied in a predetermined pattern to desired areas in the longitudinal direction of the positive electrode sheet 22, the first separator 71, and the second separator 72. The method for applying the binder liquid is not particularly restricted, and various coaters and printers can be used. Specifically, for example, various types of applicators can be used, including inkjet printers, various letterpress printers such as gravure roll coaters, die coaters such as spray coaters, slit coaters, comma coaters, and capillary coaters (CAP coaters), and lip coaters.

Although not particularly limited, in the wound electrode body fabrication step described later, it is preferable to apply the binder liquid to an area in contact with the winding core 240 such that the adhesive layer has a small weight per area. For example, preferably, the weight per area of the winding core 240 contacting area on the second face 71b of the first separator 71 is smaller than that of the winding core 240 contacting area on the first face 71a. More preferably, no adhesive layer is formed in the winding core 240 contacting area on the second face 71b of the first separator 71 as illustrated in FIG. 11. Although not illustrated, it is also preferable that the weight per area of the winding core 240 contacting area on the fourth face 72b of the second separator 72 is smaller than that of the winding core 240 contacting area on the third face 72a. More preferably, no adhesive layer is formed in the winding core 240 contacting area on the fourth face 72b of the second separator 72. This allows the wound electrode body 20 to be suitably removed from the winding core 240.

When the wound electrode body 20 is fabricated, preferably, the binder liquid is applied to the outermost peripheral face such that the weight per area of the adhesive layer is small. Specifically, it is preferable that, on the fourth face 72b of the second separator 72, the weight per area of the adhesive layer in the area corresponding to the outermost periphery is smaller than that in the area corresponding to the outermost periphery on the third face 72a. More preferably, no adhesive layer is formed in the region corresponding to the outermost periphery on the fourth face 72b of the second separator 72. It is preferable that, on the second face 71b of the first separator 71, the weight per area of the adhesive layer in the area corresponding to the outermost periphery is smaller than that in the area corresponding to the outermost periphery on the first face 71a. More preferably, no adhesive layer is formed in the region corresponding to the outermost periphery on the second face 71b of the second separator 72. Thereby, the handleability of the wound electrode body 20 is improved, e.g. the wound electrode body 20 is smoothly accommodated in the electrode body holder 29.

Although not particularly limited, it is preferable to form the first adhesive layer 81 on the first separator 71 while the first separator 71 passes through the conveyance route k3 in an area at ±30° relative to the vertical straight line L1, and it is preferable to form the second adhesive layer 82 on the second separator 72 while the second separator 72 passes through the conveyance route k4 in an area at ±30° relative to the vertical straight line L1. In other words, it is preferable that the first applicator 150a is disposed in the area at ±30° relative to the vertical straight line L1 in the conveyance route k3, and the second applicator 150b is disposed in the area at ±30° relative to the vertical straight line L1 in the conveyance route k4. Thereby, for example, uneven application in the width direction of the separator, or the like can be improved to form a more uniform adhesive layer. Preferably, the adhesive layer is formed while the separator passes through the conveyance route in an area at ±15° relative to the vertical straight line L1, more preferably, the adhesive layer is formed while the separator passes through the conveyance route in an area substantially perpendicular to the vertical straight line L1.

Although not particularly limited, preferably, the adhesive layer is formed on a face not in contact with the plurality of rollers 261 to 264 in the adhesive layer formation step. For example, preferably, the first adhesive layer 81 is formed on a face not in contact with the roller 263 in the first separator 71. Preferably, the first adhesive layer 81 and/or the second adhesive layer 82 are formed on a face not in contact with the roller 261 in the positive electrode sheet 22. Furthermore, preferably, the second adhesive layer 82 is formed on a face not in contact with the roller 264 in the second separator 72. As a result, the wound electrode body fabrication step can be executed while the formed adhesive layer is suitably maintained.

In the wound electrode body fabrication step, the strip-shaped first separator 71, the strip-shaped positive electrode sheet 22, the strip-shaped second separator 72, and the strip-shaped negative electrode sheet 24 are wound to fabricate the wound electrode body 20. The wound electrode body fabrication step can be suitably executed e.g. using the winding machine 200. When using the winding machine 200 for the winding, the first separator 71, the positive electrode sheet 22, the second separator 72, and the negative electrode sheet 24 are fed to the winding core 240 from one side with respect to the vertical straight line L1, as illustrated in FIG. 9. Although the arrangement of the respective components is not particularly limited, preferably, the first separator 71, the positive electrode sheet 22, the second separator 72, and the negative electrode sheet 24 are disposed in this order from the bottom, which are fed to the winding machine 200 (more specifically, to the winding core 240), as illustrated in FIG. 9.

Preferably, the angle at which the positive electrode sheet 22 is fed to the winding core 240 is smaller than the angle at which the negative electrode sheet 24 is fed to the winding core 240. In this embodiment, the "angle at which the positive electrode sheet is fed to the winding core" refers to an angle relative to a horizontal straight line L2 extending across the center C2 of the winding core 242 in the horizontal direction. The "angle at which the negative electrode sheet is fed to the winding core" refers to an angle relative to the horizontal straight line L2. As illustrated in FIG. 9, the angle at which the positive electrode sheet 22 is fed to the winding core 240 is preferably substantially parallel to (i.e. 0°) the horizontal straight line L2, and the angle at which the negative electrode sheet 24 is fed may be larger than that for the positive electrode sheet 22. Generally, the positive electrode sheet 22 has flexibility lower than of the negative electrode sheet 24. Thus, the angle at which the positive electrode sheet 22 is fed to the winding core 240 (angle relative to the horizontal direction) is reduced, so that the positive electrode sheet 22 can be wound with higher quality.

As illustrated in FIG. 10, the first separator 71, the positive electrode sheet 22, the second separator 72, and the negative electrode sheet 24, which have been conveyed along the predetermined conveyance routes k1 to k4 respectively, are wound around the winding core 240 located at the first position P1. At this time, preferably, the first separator 71 and the second separator 72 are wound around the winding core 241 such that the second face 71b of the first separator 71 is in contact with the winding core 240 and the first face 71a of the first separator 71 is in contact with the third face 72a of the second separator 72, as illustrated in FIG. 11. Although not particularly limited, preferably, the first face 71a of the first separator 71 and the third face 72a of the second separator 72 are bonded via at least one of the first adhesive layer 81 and the second adhesive layer 82. As a result, the positive electrode sheet 22, the first separator 71, and the second separator 72 can be wound around the winding core 240 while they are suitably bonded to each other.

As illustrated in FIG. 11, in the region where the winding of the wound electrode body 20 starts, the first separator 71 and the second separator 72 may be wound around the winding core 240 without interposing the positive electrode sheet 22 therebetween. At this time, preferably, the first face 71a of the first separator 71 and the third face 73 a of the second separator 72 are bonded via only any one of the first adhesive layer 81 and the second adhesive layer 82. Although not illustrated, when the first adhesive layer 81 is formed on the first face 71a of the first separator 71 and the second adhesive layer 82 is formed on a face of the positive electrode sheet 22, which faces the second separator 72, it is preferable that, in the area where the first separator 71 and the second separator 72 face each other without interposing the positive electrode sheet 22 therebetween, the first face 71a of the first separator 71 and the third face 72a of the second separator 72 are bonded via the first adhesive layer 81. In addition, although not illustrated, when the first adhesive layer 81 is formed on a face of the positive electrode sheet 22, which faces the first separator 71, and the second adhesive layer 82 is formed on the third face 72a of the second separator 72, it is preferable that, in the area where the first separator 71 and the second separator 72 face each other without interposing the positive electrode sheet 22 therebetween, the first face 71a of the first separator 71 and the third face 72a of the second separator 72 are bonded via the second adhesive layer 82. As a result, at the start of the winding, the separators are suitably bonded to each other, and winding deviation or the like can be suppressed. Furthermore, a thickness of the electrode body can be decreased without lowering the battery capacity.

In the manufacturing method disclosed herein, a winding core having the plurality of suction holes 240a can be adopted as the winding core 240, as illustrated in FIG. 11. Although not particularly limited, preferably, the separators are fixed by sucking the second face 71b of the first separator 71 to the winding core 240 in the wound electrode body fabrication step. More preferably, the first separator 71 and the second separator 72 are sucked and fixed while they are overlapped, as illustrated in FIG. 11. At this time, when the adhesive layers are formed on the first face 71a of the first separator 71 and/or the third face 72a of the second separator 72, the first separator 71 and the second separator 72 can be fixed to the winding core 240 while the first separator 71 and the second separator 72 are suitably bonded to each other. As described above, the first separator 71 and the second separator 72 are porous. Thus, the suction holes 240a of the winding core 240 exhibits suitable suction, so that the first separator 71 and/or the second separator 72 can be fixed on the outer peripheral face of the winding core 240.

Preferably, the wound electrode body fabrication step includes a cutting process, in which the first separator 71 and the second separator 72 are cut while overlapped. In this cutting process, a cutting jig (in this embodiment, the cutter 251) is pressed against the first separator 71 and second separator 72 that are overlapped and held on the winding core 240 to cut the first separator 71 and second separator 72. At this time, it is preferable that, while the first separator 71 and the second separator 72 wound around the preceding winding core (in this embodiment, winding core 241) leaving from the first position P1 are overlapped and held on the outer peripheral face of another winding core (in this embodiment, winding core 242) located at the first position P1 as illustrated in FIG. 12, the first separator 71 and the second separator 72 are cut on or near the other winding core. In other words, the cut portions of the first separator 71 and the second separator 72 serve as a winding end portion of the preceding wound body (in this embodiment, the wound body 20a wound around the winding core 241), and also serve as a winding start portion of the subsequent wound body. As a result, after the first separator 71 and the second separator 72 are cut, a subsequent wound body can be successively fabricated, thereby improving productivity.

Although not particularly limited, it is preferable that, in the first separator 71, a weight per area of the first adhesive layer 81 in the area to be cut by the cutting process is smaller than a weight per area of the first adhesive layer 81 in the area facing the positive electrode sheet 22. For example, a ratio of a weight per area F (g/m²) of the first adhesive layer 81 in the area to be cut by the cutting process to a weight per area E (g/m²) of the first adhesive layer 81 in the area facing the positive electrode sheet 22 (F/E) is preferably 0.5 or lower, or may be 0.25 or lower. Even more preferably, in the first separator 71, no first adhesive layer 81 is formed in the area to be cut by the cutting process. Therefore, the first separator 71 can be stably cut.

Although not particularly limited, it is preferable that, in the second separator 72, a weight per area of the second adhesive layer 82 in the area to be cut by the cutting process is smaller than a weight per area of the second adhesive layer 82 in the area facing the positive electrode sheet 22. For example, a ratio of a weight per area 'H' (g/m²) of the second adhesive layer 82 in the area to be cut by the cutting process to a weight per area 'G' (g/m²) of the second adhesive layer 82 in the area facing the positive electrode sheet 22 (H/G) is preferably 0.5 or lower, or may be 0.25 or lower. Even more preferably, in the second separator 72, no second adhesive layer 82 is formed in the area to be cut by the cutting process. Thereby, the first separator 71 and the second separator 72 can be stably cut even when the first separator 71 and the second separator 72 are sucked to the winding core 240 while the first separator 71 and the second separator 72 are overlapped.

In the first separator 71 and the second separator 72, the weight per area of the area to be cut by the cutting process can be controlled by decreasing an amount of a binder liquid to be applied to the area to be cut or by applying no binder liquid in the adhesive layer formation step.

The wound body 20a fabricated using the winding machine 200 is taken out from the winding core 240, and the wound body 20a is pressed into a flat shape to fabricate the wound electrode body 20. Then, the resulting wound electrode body 20 is inserted into the battery case 10 and the case 10 is sealed to fabricate the battery 100.

For example, as illustrated in FIG. 6, the positive electrode second current collecting member 52 is joined to the positive electrode tab group 25 of the wound electrode body 20, and the negative electrode second current collecting member 62 is joined to the negative electrode tab group 27. Then, as illustrated in FIG. 5, a plurality (three in this embodiment) of wound electrode bodies 20 are arranged such that the flat portions 20f face each other. The sealing plates 14 are disposed on the tops of the wound electrode bodies 20, and each positive electrode tab group 25 of each wound electrode body 20 is bent such that the positive electrode second current collecting member 52 and one side face 20e of the wound electrode body 20 face each other. Thereby, the positive electrode first current collecting member 51 and the positive electrode second current collecting member 52 are connected to each other. Similarly, each negative electrode tab group 27 of each wound electrode body 20 is bent such that the negative electrode second current collecting member 62 and the other side face 20h of the wound electrode body 20 face each other. Thereby, the negative electrode first current collecting member 61 and the negative electrode second current collecting member 62 are connected to each other. As a result, the wound electrode body 20 is attached to the sealing plate 14 via the positive electrode current collector 50 and the negative electrode current collector 60. Subsequently, the wound electrode body 20 attached to the sealing plate 14 is covered with the electrode body holder 29 (see FIG. 3) and then accommodated inside the outer jacket 12. As a result, the flat portion 20f of the wound electrode body 20 faces the long side wall 12b of the outer jacket 12 (i.e. flat face of the battery case 10). The upper curved portion 20r faces the sealing plate 14, and the lower curved portion 20r faces the bottom wall 12a of the outer jacket 12. Subsequently, the opening 12h on the top face of the outer jacket 12 is closed with the sealing plate 14, then the outer jacket 12 and the sealing plate 14 are joined (weld bonded) to construct the battery case 10. Then, an electrolyte is injected into the battery case 10 from the injection hole 15 of the sealing plate 14, and the injection hole 15 is closed with the sealing member 16. Thus as described above, the battery 100 can be manufactured.

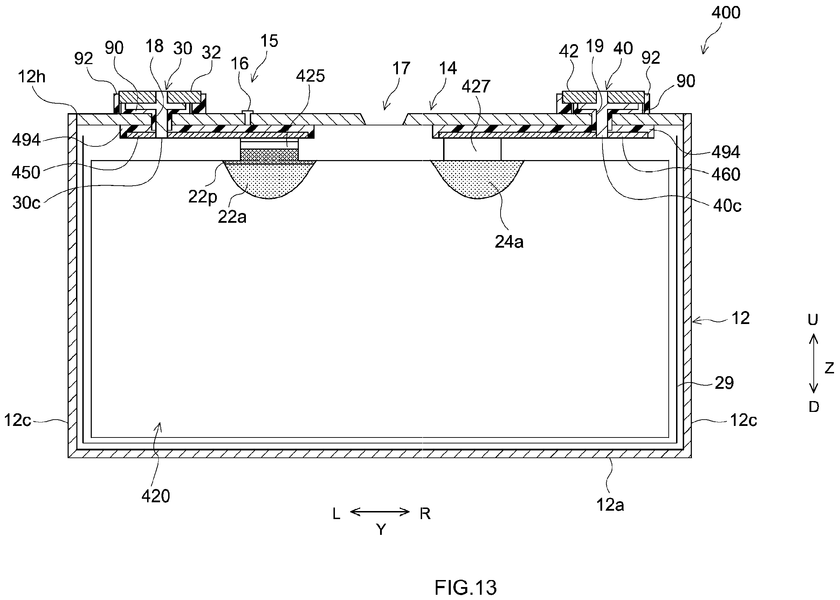

In the embodiments described above, the wound electrode body 20 was disposed inside the outer jacket 12 in an orientation where the winding axis WL is parallel to the long side direction Y of the outer jacket 12. However, the wound electrode body may be disposed inside the outer jacket 12 in an orientation where the winding axis WL is parallel to the vertical direction Z of the outer jacket 12. FIG. 13 is a diagram corresponding to FIG. 2, illustrating a battery 400 according to the second embodiment. As illustrated in FIG. 13, the battery 400 has a wound electrode body 420 instead of the wound electrode body 20. In the battery 400, the arrangement of the wound electrode body 420 is different from that in the first embodiment. Hence, the battery 400 includes positive electrode tab groups 425 and negative electrode tab groups 427 instead of the positive electrode tab groups 25 and the negative electrode tab groups 27. The battery 400 includes a positive electrode current collector 450 and a negative electrode current collector 460 instead of the positive electrode current collector 50 and the negative electrode current collector 60. The battery 400 includes an internal insulating member 494 instead of the internal insulating member 94. Except for these components, the battery 400 may be configured similarly to the battery 100 according to the first embodiment. According to the manufacturing method disclosed herein, the battery 400 according to the second embodiment can also be suitably manufactured by a substantially same method as for the battery 100 according to the first embodiment.

The wound electrode body 420 is accommodated in the battery case 10 such that the winding axis WL is substantially aligned with the vertical direction Z in this embodiment. In other words, the wound electrode body 420 is disposed inside the battery case 10 in an orientation where the winding axis WL is substantially parallel to the long side wall and the short side wall 12c and substantially orthogonal to the bottom wall 12a and the sealing plate 14. A pair of curved portions face the short side walls 12c of the outer jacket 12. A pair of flat portions face the long side walls of the outer body 12. The end faces of the wound electrode body 420 (i.e. laminated faces of the positive electrode sheet 22 and the negative electrode sheet 24) face the pair of the bottom wall 12a and sealing plate 14. The material, configuration, and the like of each member constituting the wound electrode body 420 may be the same as those of the wound electrode body 20 according to the first embodiment.

The positive electrode tab groups 425 and the negative electrode tab groups 427 are disposed on one end of the wound electrode body 420 in the vertical direction Z (upper end portion in FIG. 13). The positive electrode current collector 450 is attached to the positive electrode tab groups 425. The positive electrode tab groups 425 are electrically connected to the positive electrode terminal 30 via the positive electrode current collector 450. The negative electrode current collector 460 is attached to the negative electrode tab groups 427. The negative electrode tab groups 427 are electrically connected to the negative electrode terminal 40 via the negative electrode current collector 460.

### <Applications of Battery>

The battery described above can be used for various applications, and suitably used as e.g. a power source (driving power source) for motors mounted in vehicles such as passenger cars and trucks. Examples of vehicle types include, but are not particularly limited to, plug-in hybrid electric vehicles (PHEV), hybrid electric vehicles (HEV), and battery electric vehicles (BEV). The battery can also be suitably used in a construction of an assembled battery.

Although some embodiments of the present disclosure have been explained above, the embodiments are merely examples. The present disclosure can be implemented in various other forms. The present disclosure can be implemented based on the contents disclosed herein and the technical common sense in the field. The technology described in claims includes various modifications and changes of the embodiments described above as examples. For example, a part of the above embodiments can be replaced by other variants, and other variants can be added to the above embodiments. A technical feature can be deleted as appropriate unless the technical feature is described as essential.

For example, a drying step may be executed after the adhesive layer formation step and before the wound electrode body fabrication step. In the drying step, the solvent of the binder liquid applied to the positive electrode sheet 22, the first separator 71, and the second separator 72 is removed. Examples of the available method for the drying include, but are not particularly limited to, ventilation drying, heating drying, vacuum drying, and the like. Note that the drying step is not essential and can be omitted as appropriate.

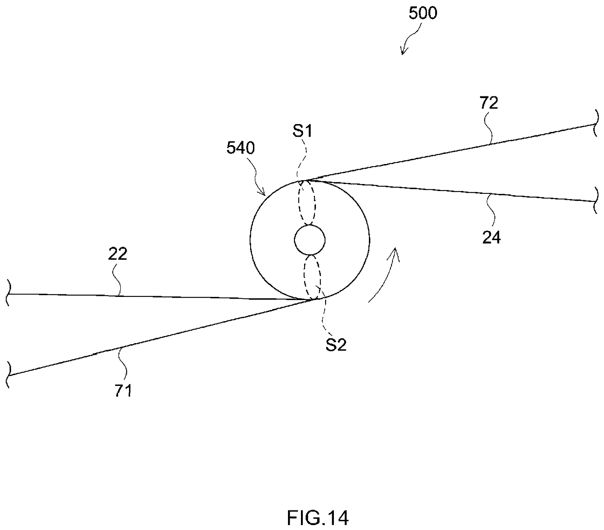

For example, in the above description, the wound electrode body 20 was fabricated using the winding machine 200 as illustrated in FIG. 10. However, the winding machine is not limited to this winding machine 200. FIG. 14 is a diagram illustrating an example of another winding machine. As illustrated in FIG. 14, the wound electrode body 20 can also be fabricated by a winding machine 500 having a first slit S1 and a second slit S2 on an almost cylindrical winding core. The first slit S 1 and the second slit S2 are spaced 180° apart from each other around the winding axis of the winding core 540. In fabricating the wound electrode body 20, the distal end of the first separator 71 is pinched by one of the first slit S1 and the second slit S2 of the winding core 540, and the distal end of the second separator 72 is pinched by the other slit. Then, the winding core 540 is rotated a little, and the distal end of the positive electrode sheet 22 is inserted between the second separator 72 wound around the winding core 540 and the first separator 71 to be wound around the winding core 540. Furthermore, the distal end of the negative electrode sheet 24 is inserted between the first separator 71 wound around the winding core 540 and the second separator 72 to be wound around the winding core 540. Subsequently, the winding core 540 is further rotated to wind the first separator 71, the positive electrode sheet 22, the second separator 72, and the negative electrode sheet 24. The cylindrical wound body wound around the winding core 540 is drawn out from the winding core and pressed into a flat shape to fabricate the wound electrode body 20.

As described above, specific aspects of the technology disclosed herein include aspects described in the following items.

Item 1: A method for manufacturing a battery including a wound electrode body, in which
the wound electrode body has a first separator, a positive electrode sheet, a second separator, and a negative electrode sheet that are wound together,
the positive electrode sheet and the first separator are bonded to each other by a first adhesion layer, and the positive electrode sheet and the second separator are bonded to each other by a second adhesion layer, and
the method includes:
   an adhesive layer formation step of forming the first adhesive layer on a surface of at least one of the positive electrode sheet and the first separator and forming the second adhesive layer on a surface of at least one of the positive electrode sheet and the second separator; and
   a wound electrode body fabrication step of fabricating the wound electrode body by winding the first separator, the positive electrode sheet, the second separator, and the negative electrode sheet.

Item 2: The method according to Item 1, in which
the first separator has a first face and a second face,
the second separator has a third face and a fourth face,
the first adhesive layer is disposed on the first face of the first separator,
the second adhesive layer is disposed on the third face of the second separator, and
the wound electrode body fabrication step includes winding the first separator and the second separator around a winding core such that the second face of the first separator is in contact with the winding core and the first face of the first separator is in contact with the third face of the second separator.

Item 3: The method according to Item 2, in which the first face of the first separator and the third face of the second separator are bonded via at least one of the first adhesive layer and the second adhesive layer.

Item 4: The method according to Item 2, in which, in an area where the first separator and the second separator face each other without interposing the positive electrode sheet therebetween, the first face of the first separator and the third face of the second separator are bonded to each other by only one of the first adhesive layer and the second adhesive layer.

Item 5: The method according to any one of Items 2 to 4, in which the second face of the first separator is sucked to the winding core to fix the second face in the wound electrode body fabrication step.

Item 6: The method according to any one of Items 2 to 5, in which the wound electrode body fabrication step includes cutting the first separator and the second separator by disposing the first separator and the second separator on an outer peripheral face of the winding core while they are overlapped, and then pressing a cutting jig against the first separator and the second separator.

Item 7: The method according to Item 6, in which the first adhesive layer in an area to be cut by the cutting process in the first separator has a weight per area smaller than that of the first adhesive layer formed in an area facing the positive electrode sheet in the first separator.

Item 8: The method according to Item 6 or 7, in which the first adhesive layer is not disposed in the area to be cut by the cutting process in the first separator.

Item 9: The method according to any one of Items 1 to 8, in which, in the adhesive layer formation step, the first adhesive layer is formed on the first separator while the first separator passes through a conveyance route for the first separator in an area at ±30° relative to a vertical direction, and the second adhesive layer is formed on the second separator while the second separator passes through a conveyance route for the second separator in an area at ±30° relative to the vertical direction.

Item 10: The method according to any one of Items 1 to 9, in which, in the adhesive layer formation step, the first adhesive layer is disposed on a face not in contact with a conveyer in the first separator, and the second adhesive layer is disposed on a face not in contact with the conveyer in the positive electrode sheet.

## Claims

1. A method for manufacturing a battery (100) comprising a wound electrode body (20), wherein
the wound electrode body (20) has a first separator (71), a positive electrode sheet (22), a second separator (72), and a negative electrode sheet (24) that are wound together,
the positive electrode sheet (22) and the first separator (71) are bonded to each other by a first adhesion layer (81), and the positive electrode sheet (22) and the second separator (72) are bonded to each other by a second adhesion layer (82), and
the method comprises:
an adhesive layer formation step of forming the first adhesive layer (81) on a surface of at least one of the positive electrode sheet (22) and the first separator (71) and forming the second adhesive layer (82) on a surface of at least one of the positive electrode sheet (22) and the second separator (72); and
a wound electrode body fabrication step of fabricating the wound electrode body (20) by winding the first separator (71), the positive electrode sheet (22), the second separator (72), and the negative electrode sheet (24).

2. The method according to claim 1, wherein
the first separator (71) has a first face (71a) and a second face (71b),
the second separator (72) has a third face (72a) and a fourth face (72b),
the first adhesive layer (81) is disposed on the first face (71a) of the first separator (71),
the second adhesive layer (82) is disposed on the third face (72a) of the second separator (72), and
the wound electrode body fabrication step comprises winding the first separator (71) and the second separator (72) around a winding core (240) such that the second face (71b) of the first separator (71) is in contact with the winding core (240) and the first face (71a) of the first separator (71) is in contact with the third face (72a) of the second separator (72).

3. The method according to claim 2, wherein the first face (71a) of the first separator (71) and the third face (72a) of the second separator (72) are bonded to each other by at least one of the first adhesive layer (81) and the second adhesive layer (82).

4. The method according to claim 2, wherein
in an area where the first separator (71) and the second separator (72) face each other without interposing the positive electrode sheet (22) therebetween,
the first face (71a) of the first separator (71) and the third face (72a) of the second separator (72) are bonded to each other by only one of the first adhesive layer (81) and the second adhesive layer (82).

5. The method according to any one of claims 2 to 4, wherein the second face (71b) of the first separator (71) is sucked to the winding core (240) to fix the second face (71b) in the wound electrode body fabrication step.

6. The method according to any one of claims 2 to 5, wherein the wound electrode body fabrication step comprises cutting the first separator (71) and the second separator (72) by disposing the first separator (71) and the second separator (72) on an outer peripheral face of the winding core (240) while they are overlapped, and then pressing a cutting jig against the first separator (71) and the second separator (72).

7. The method according to claim 6, wherein the first adhesive layer (81) in an area to be cut by the cutting process in the first separator (71) has a weight per area smaller than that of the first adhesive layer (81) formed in an area facing the positive electrode sheet (22) in the first separator (71).

8. The method according to claim 6 or 7, wherein the first adhesive layer (81) is not disposed in the area to be cut by the cutting process in the first separator (71).

9. The method according to claim any one of claims 1 to 8, wherein
in the adhesive layer formation step,
the first adhesive layer (81) is formed on the first separator (71) while the first separator (71) passes through a conveyance route for the first separator (71) in an area at ±30° relative to a vertical direction, and
the second adhesive layer (82) is formed on the second separator (72) while the second separator (72) passes through a conveyance route for the second separator (72) in an area at ±30° relative to the vertical direction.

10. The method according to any one of claims 1 to 9, wherein
in the adhesive layer formation step,
the first adhesive layer (81) is disposed on a face not in contact with a conveyer in the first separator (71), and
the second adhesive layer (82) is disposed on a face not in contact with the conveyer in the positive electrode sheet (22).
